# EUROPEAN PATENT SPECIFICATION

(11) **EP 0 744 100 B1**
(45) Date of publication and mention of the grant of the patent: **03.09.2003**
(21) Application number: 95907380.0
(22) Date of filing: 11.01.1995
(51) Int. Cl.: H04B 3/54

(54) **A SYSTEM AND METHOD FOR HIGH SPEED COMMUNICATION OF VIDEO, VOICE AND ERROR-FREE DATA OVER IN-WALL WIRING**
EINRICHTUNG UND VERFAHREN ZUR HOCHGESCHWINDIGKEITSÜBERTRAGUNG VON VIDEOSIGNALEN, SPRACHE UND FEHLERFREIEN DATEN ÜBER EINE EINGEMAUERTE VERDRAHTUNG
SYSTEME ET PROCEDE DE COMMUNICATION A GRANDE VITESSE D'INFORMATIONS VIDEO, VOCALES, SANS ERREUR, AU MOYEN DE CONDUCTEURS ELECTRIQUES INTEGRES DANS LE MUR

(30) Priority: 11.01.1994 US 180421
(43) Date of publication of application: 27.11.1996
(73) Proprietor: Abraham, Charles, Wayne, PA 19087 (US)
(72) Inventor: Abraham, Charles, Wayne, PA 19087 (US)
(74) Representative: Crawford, Andrew Birkby
(86) International application number: US9500354
(87) International publication number: WO95019070

(56) References cited:
- WO-A-90/13950
- FR-A- 2 691 863
- US-A- 3 943 447

## Description

### FIELD OF THE INVENTION

The present invention relates to a communication network and method used to send and receive video, voice and high-speed data over conventional, existing AC wiring, telephone wiring, or coaxial wiring to communicate with external service systems, such as video or cable television systems, telephone systems and data communication systems.

### BACKGROUND OF THE INVENTION

To access current communication services, for video, voice and/or data (VVD communication services), such as cable television and telephone services, it is often necessary to install separate wiring for each type of service. This wiring is in addition to the AC wiring used to distribute electrical power throughout a customer's premises. Conventional wiring used in buildings, such as residential homes, varies depending upon the application for which it is being used. Typically, cable television and video transmissions use coaxial cable wiring, telephones use bundled telephone wire and PBX telephone systems use twisted pair wiring. AC power is usually distributed over copper electrical wiring. Aluminum wiring has also been used for AC power. Computer networks typically use either, or both, coaxial cable or twisted pair wiring. Some homes use antenna wire (300 ohm) for receiving television/and or radio signals. Conventional wiring can also include any other type of wiring that is used for carrying electricity for either power or electrical signal communication.

Houses and buildings (customer premises), which were not originally wired with coaxial cable for video transmission and cable television, require the addition of coaxial cabling to every room where a television set is desired. In running new coaxial cable to each of these rooms, it is often necessary to drape the cable over the outside walls of the house and then drill holes into each room to run the cable into the room. Inside the room, the cable receptacle is often placed at the entry point into the room. This avoids the cost and effort involved in pulling cable through walls. If an outlet is located away form the entry point, the cable is run along the baseboard to a desired location for the receptacle or outlet. Cable run in this manner is often unsightly and can provide a hazard if it comes loose from the baseboard.

A similar problem exists with respect to telephones when extra telephone outlets or additional lines are desired at a customer premises. With the advent of facsimile machines and computer modems, it is not uncommon to have several telephone lines running into a building, even a home. Particularly in a home situation, the number of telephone lines may exceed the number of paired wire present in the standard bundled telephone wire run to each room. Although some home telephone wiring is bundled in three pair (six wires), allowing up to three separate lines, it is more common to use wiring bundles of 2 pair wire, allowing only two separate lines at the end of a given cable run (ie. a room). A separate lines for a telephone, a facsimile machine and a computer modem requires more than the number of possible lines allowed if a home is wired with two pair telephone line. Additional telephone lines may be necessary for use in a home office or business.

If a local area network (LAN) is desired, it is necessary to install either or both coaxial wiring and twisted pair wiring to connect the nodes of the network to the network server and/or each other node. Adding network wiring is oftentimes more expensive than adding cable television or telephone wiring. Network wiring must be installed carefully to ensure that there are no cuts or kinks in the wire which could impede data flow or integrity of the data being transmitted.

Although fiber optic cable could also be an option for VVD wiring, it is very expensive for inter home or building use. At the present time, fiber optic cabling is more commonly used in high volume VVD applications, rather than intra building applications.

In Applicant's US patents US-A-5717685 and US-A-55351272 there are described systems and methods for transmitting and receiving information over electrical power lines using a dielectric core coupler, such as an air-core coupler. Information signals are transmitted over the electrical power lines at the same time electricity for AC power is transmitted. The information and the electrical power are both accessible at the same time and at the same location at a customer's premises.

Document US-A-3943447 discloses a cable TV network, in which control information is sent on the power system cables.

Systems other than those described in Applicant's copending applications use AC power lines for transmitting information signals. One of the limitations of these systems is that they do not allow high-speed data/signal communication. The approximate data flow limit of 19.2 Kbaud of line-carrier modems, for instance, would be wholly inadequate for the transmission speeds of up to 10 Mbaud, achieved by a LAN, such as an Ethernet system. The transmission of video signals typically requires transmission rates on the order of 6 megabits per second (Mbps). Therefore video transmission can not be achieved in systems which do not allow high speed data transmission, such as systems using line-carrier modems.

Existing technologies for VVD communication include:
Cable Network Systems which deliver services over separately owned cable installations to set top converters and/or cable ready television set;
Asymmetrical Digital Subscriber Line (ADSL) technology which delivers full duplexing data, video and voice at 1.544 - 6 Mbps over twisted pair wire;
Broadband integrated Services Digital Network (B-ISDN) Synchronous Optical Network (SONET) and Asynchronous Transfer Mode (ATM) Access technologies which will initially deliver interactive video and data at a 6 Mbps data rate; and
Direct Broadcast Satellite, which requires a satellite dish at each location and then distributes television channels from a tunable receiver over coaxial line to a TV set (one receiver per television set). This technology is not data or voice oriented.

### SUMMARY OF THE INVENTION

The present invention comprises a communication network, including an information signal line which carries a plurality of selectable information signals. Electrical lines are run throughout a building, with electrical outlets connected to the electrical line. An electrical line distribution panel connects the information signal line and the electrical line for distributing the selectable information signals over the electrical line to the location of a given electrical outlet. Dielectric-core couplers which are impedance-matched with the electrical line are connected to the electrical outlets. Finally, at least one communication station is connected to a dielectric-core coupler for receiving the selectable information signals.

In a preferred embodiment, the information signal line is a video transmission line, such as a cable television line. These lines are typically either fiber optic or coaxial cable which is tapped into at each customer premises for receiving video service. For a cable television system embodiment, the communication station includes a cable television tuner for selecting a cable television station. The distribution panel of a cable television embodiment includes a tuner capable of tuning a cable television signal from the information signal line in response to a signal from the first station.

In another embodiment of the present invention, the information signal line includes a telephone line which is tapped into at each customer premises to provide telephone service. In this embodiment, the first station is comprised of a telephone device, such as a telephone, facsimile machine, or computer. In this embodiment, the distribution panel includes a tuner for selecting the phone line for which the voice or data information will be transmitted over.

In still another embodiment, telephone service is provided directly to the electrical wiring of a customer premises without a tuner, allowing selection and "tuning" of a telephone line at the telephone location in the customer premises.

### BRIEF DESCRIPTION OF THE FIGURES

The invention will now be described by way of nonlimiting example, with reference to the attached drawings in which:
**FIGURE 1** shows a communication network in accordance with the present invention installed in a customer premises;
**FIGURE 2** shows several customer premises using a communication network in accordance with the present invention;
**FIGURE 3** shows a block diagram of an exemplary transceiver incorporating a dielectric core coupler used in accordance with the present invention;
**FIGURE 4** shows a diagram of an exemplary distribution panel in accordance with the present invention;
**FIGURE 5** shows a frequency spectrum used in accordance,with the present invention;
**FIGURE 6** illustrates the frequency characteristics of the present invention used for LAN communication;
**FIGURE 7** shows the frequency characteristics of the present invention used for video communication; and
**FIGURE 8** shows phase and attenuation characteristics related to exemplary embodiments of the present invention;
**FIGURE 9** is a flow chart of a method of selecting a channel for receipt by a communication device in accordance with the present invention.
**FIGURE 10** is a schematic diagram of an exemplary coupler.
**FIGURE 11** is a schematic diagram of an exemplary second coupler.
**FIGURES 12A AND 12B** illustrate the coaxially extended air-core transformer with coupling capacitor utilized in the present invention.

### DETAILED DESCRIPTION

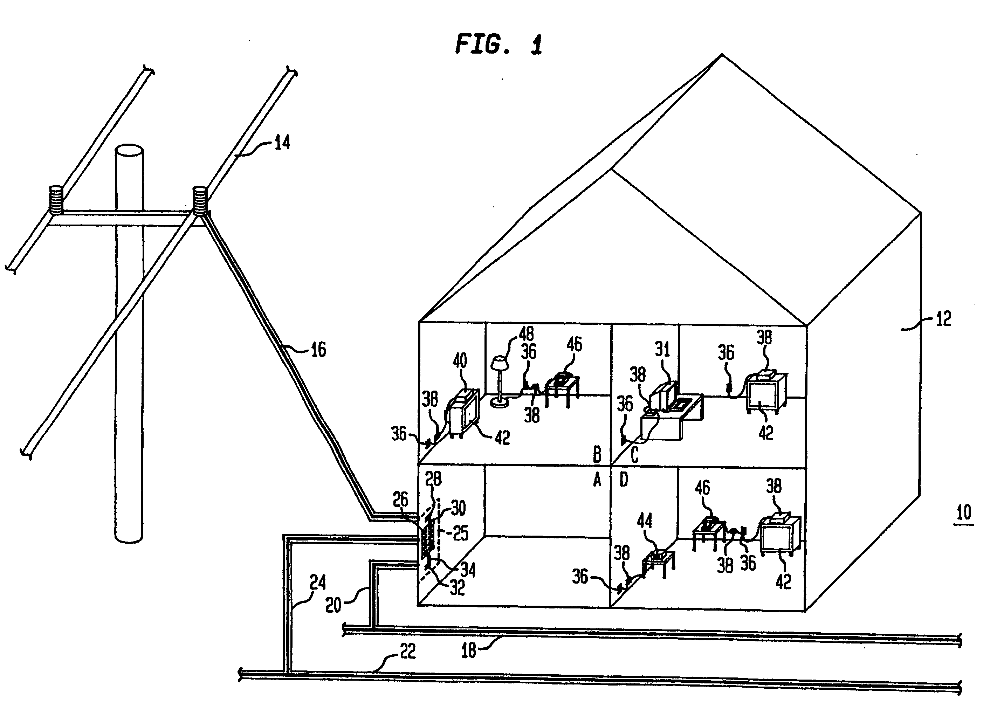

There is shown in **FIGURE 1** an exemplary communication network **10** operating in a house **12.** Communication network **10** is constructed in accordance with the present invention. House (customer premises) **12** is shown connected to telephone line **14**, video transmission line **18** (such as a cable television line) and AC power line **22.** House **12** can be any building serving as a customer premises, such as an office building, storefront, residential home, etc. Telephone line **14** and video line **18** are examples of information signal lines which carry selectable information signals. Other types of information lines include those previously discussed, as well as others which carry voice, video and or data information signals. It will be understood by those skilled in the art that cable television systems are a common form of video communication systems, but are not the only type of video communication systems with which the present invention may be practiced. Cable television systems are used as an example of a video communication system in this specification.

The selectable information signals on telephone line **14** are the separate telephone lines which may enter a house **12.** Most homes have at least one telephone line. It is very common to have more than one telephone line to cover needs for both voice and data communication, for example. Each telephone line must be separately selectable. For home use, the selection of multiple lines is typically handled by a multiline telephone. A multiline telephone usually has several jacks, one for each line that the multiline telephone can handle. It may also have a single multiline jack, able to handle two, three or four lines, depending upon whether it accepts a two, three or four pair telephone jack. In an office setting, a telephone PBX system may handle the selection of multiple lines digitally. In either case, a physical device is used to select one or more lines (for conferencing) for operation at a particular location and time.

The selectable information signals of video line **18** are the video channels which can be individually tuned by either a video receiver. Using the example of cable television systems, the selectable information signals are the cable television channels and the video receiver is a cable-capable television set or a separate cable television tuner. It is not uncommon to have upwards of fifty selectable cable television stations accessible by a customer of a local cable television system. Recently, there has been a great deal of publicity concerning the possibility of increasing the number of accessible cable stations to more than five hundred at a given customer premises. Each of these television stations must be capable of being separately selected. Also, some of these stations, even in present cable television systems are called "pay per view", typically requiring the customer to either order a show, movie, or other event by a personal telephone call or an automatic telephone call through the cable television tuner provided by the local cable television company.

In another embodiment of the present invention, video line **18** may be connected to a satellite dish (or other antenna) instead of to a local cable television system or other direct wired video service. The satellite dish would serve the same purpose as the local cable television system, namely providing access to a multitude of television channels.

Interactive television systems send signals directly over the cable to the cable television company without using the telephone lines. Interactive television would open up the possibility for communication with facilities such as libraries and schools.

Telephone line **14** is connected to house **12** via telephone tapping line **16.** Video line **18** is connected to house **12** via cable tapping line **20.** AC power line **22** is connected to house **12** via AC tapping line **24.** Each of the three tapping lines is connected to house **12** at a distribution panel **25.** Distribution panel **25** consists of a circuit breaker or fuse box **26** and at least one signal selector, such as telephone signal selector **28** and video signal selector **32.** Circuit breaker or fuse box **26** could also include (or be substituted by) a telephone punch down block or series of coaxial cable line splitters, depending upon the particular installation and cabling over which the selectable information signals are transmitted throughout house **12.**

In **FIGURE 1** telephone signal selector **28** is connected to circuit breaker box **26** via connection **30**. Telephone signal selector **28** is designed to access several telephone lines and allow access to these telephone lines by devices capable of telephone line communication, such as telephones, located throughout house **12.** Telephone signal selector **28** is similar in function to a multiline telephone or PBX system in selecting a telephone line(s).

Video signal selector **32** functions in a similar manner to that of telephone signal selector **28,** except instead of selecting a telephone line, video signal selector **32** is designed to tune a cable television station. Video signal selector **32** is connected to circuit breaker box **26** via connection **34.**

As circuit breaker box **26** is the working circuit breaker box for house **12,** AC power via tapping line **24** is also connected to circuit breaker box **26.** As described in Applicant's co-pending applications which are incorporated by reference, the selectable information signals used by various devices located throughout house **12** communicate over the standard AC electrical wiring (not shown) which exists in a house or building wired for AC electrical power. Both selectable information signals and AC power can be accessed at any AC outlet located in house **12.** The actual wiring of a house such as house **12,** is understood by those skilled in the art.

The selectable information signals and AC electrical power is shown entering house **12** in room A. Typically, these electrical lines enter a house in the basement and/or garage. Various devices using the information signal lines and power lines are shown in rooms B, C and D of house **12.**

In room B, a television set **42** and cable television tuner **40** are shown. Although a separate cable television tuner **40** is shown, it should be understood that many cable television systems allow cable-ready televisions to operate without the need for an external tuner. Certain services, however, such as pay per view, typically require a separate cable television tuner, such as cable television tuner **40**. These special tuners are designed to communicate with the local cable television system via telephone line for pay per view programming. Cable television tuner **40** constitutes a communication station of the present invention.

Cable television tuner **40** is connected to a power line coupler modem (PLCM) **38.** PLCM **38** is used to communicate selectable information signals over the electrical wiring in house **12,** between a communication station such as cable tuner **40** and a signal selector such as video signal selector **32.** PLCM **38** is plugged into a wall outlet **36.** Wall outlet **36** is a standard AC electrical outlet in the exemplary embodiment shown. Other electrical outlets could be used, depending upon the type of electrical wiring carrying the selectable information signals.

Using 16 Quadrature Amplitude Modulation (16 QAM) and/or 16 Phase Shift Keying (PSK) modulation formats, each video channel requires approximately 1.8 MHz of bandwidth to achieve a data-flow rate of 6 Mbps. This is the data-flow rate which is necessary for video transmission. 14 channels can be selected in an exemplary embodiment of the present invention, using 1.8 MHz of bandwidth per channel (plus .2 MHz of bandwidth per channel for the channel selection control signal, equaling 2 MHz total per channel) and a frequency range of 2-30 MHz for video transmission (28 divided by 2 equals 14 channels). This requires individual communication stations to send a channel request signal to a separate tuner, such as video signal selector **32,** which in turn, tunes the requested channel and transmits the selectable information signal (ie. cable television channel signal) over the electrical wiring of a building such as house **12** at the frequency of the PLCM **38** of the requesting communication station.

A 200 KHz interactive reverse channel selection band is used to send the selection signal to video signal selector **32.** This channel is capable of sending a 64-128 Kbps signal to video signal selector **32.**

With different modulation formats and techniques or the addition of a greater frequency spectrum, it is possible for more than 14 channels to be transmitted in accordance with the present invention. 14 channels are used as an example in the embodiments described herein.

In another embodiment of the present invention, instead of using standard AC electrical wiring, existing telephone wire could be used for the transmission of selectable information signals between television tuner **40** and video signal selector **32.** The present invention can use any electrical wiring for transmission of the selectable information signals. The ability to use any electrical wiring provides flexibility for users of the present communication network. A user is no longer limited to the particular outlet located in a particular position of a particular room. The user now has the flexibility to connect any sort of communication device to whatever outlet is available (AC electrical, telephone, cable, etc.) so long as the outlet in question is tied into a distribution panel such as distribution panel **25.** Distribution panel **25** could have included a telephone punch-down block in place of or in addition to a circuit breaker box **26,** for distributing information signals throughout house **12** using the telephone wiring. In this way, communication network **10** can be adapted to whatever wiring system is in place or which can be easily installed at a particular building or section of a building. Communication network **10** is not limited to using specific types of wiring for accessing particular communication/information services.

Room B of house **12** also contains a telephone **46** connected through a different PLCM **38** to a different wall outlet **36** than that used with television tuner **40.** Lamp **48** illustrates the use of electrical devices in conjunction with communication devices. The selectable information signals modulated over the electrical wiring of house **12** have very high signal-to-noise ratios, as disclosed in Applicant's co-pending applications. There should be little or no interference between devices, as all selectable information signals are transmitted over separate frequencies.

Room C of FIGURE **1** shows a computer **31** connected through still another PLCM **38** to another wall outlet **36.** Although not shown, computer **31** may contain a separate modem which, in turn, is connected to the PLCM **38** shown. A PLCM **38** could also be specially designed to incorporate a modem for use with computers. An additional television set **42** is also shown in room C.

Computer **31** could be networked with other computers in house **12** (not shown), each computer connected to a separate PLCM **38** to network over the electrical wiring of house **12.** In the present invention, LAN communications take place over the 120 KHz to 480 KHz frequency range, using a 6 coupler system in each PLCM **38** used for LAN communication, to achieve an effective bandwidth of 360 KHz. Each PLCM **38** used for networked computers would be tuned to transmit and receive over this frequency range.

Room D includes a facsimile machine **44** connected to another PLCM **38** plugged into another wall outlet **36.** There is also shown in room D an additional television **42** and an additional telephone **46** connected at the same wall outlet **36.**

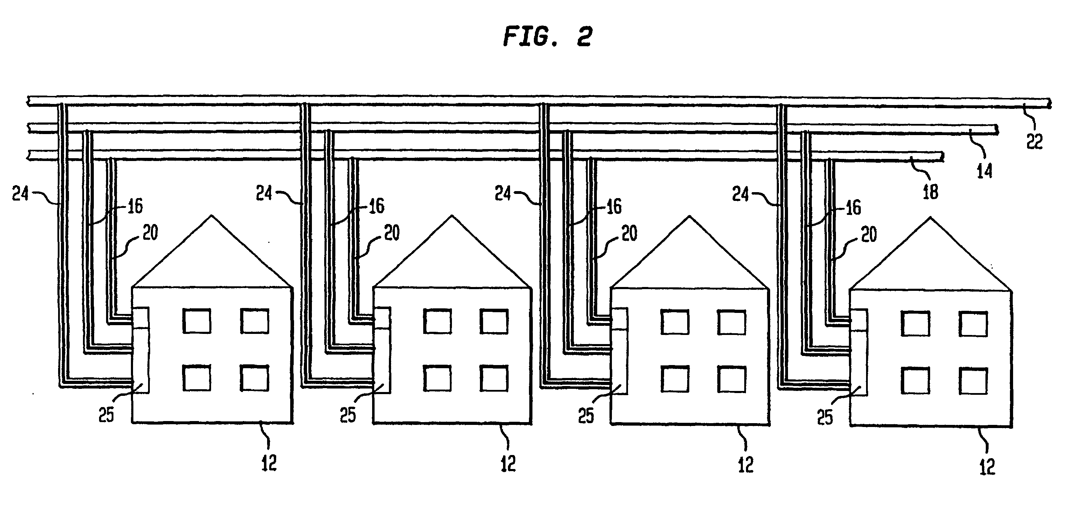

Several houses **12** are shown in **FIGURE 2,** each connected to a video line **18,** an AC power line **22** and a telephone line **14.** Separate distribution panels **25** are used at each house **12.** Because the present invention does not require rewiring of customer premises, existing circuit breaker/fuse boxes **26** (and/or telephone punch-down blocks) need only be connected to appropriate signal selectors **28** and/or **32** to provide interactive voice, video and data communication for customer premises.

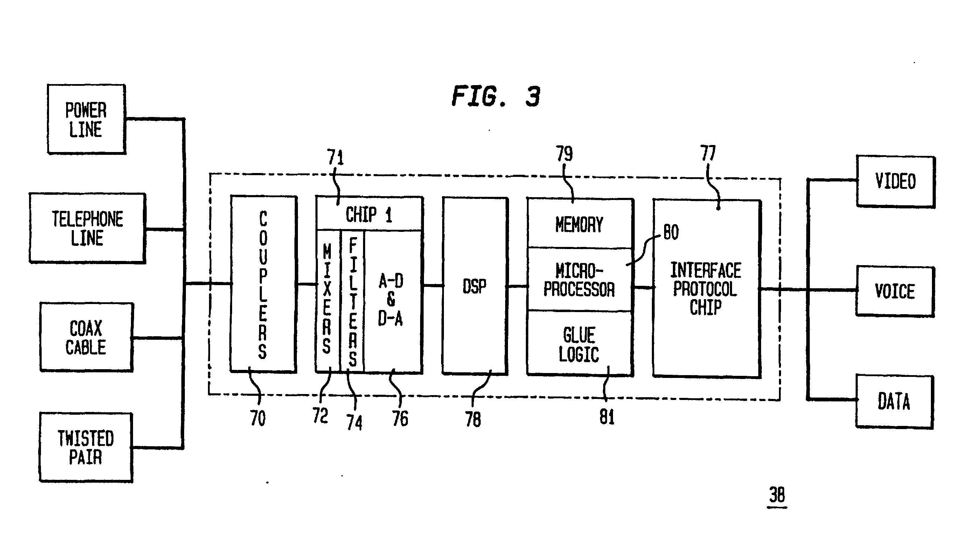

There is shown in **FIGURE 3,** a block diagram of an exemplary power line coupler modem **38** used for video, voice and/or data transmission. Video and data transmission are high speed transmissions. Video transmission requires a data flow rate of approximately 6 megabits per second (Mbps). Data transmission over a local area network (LAN) may achieve data-flow rates of 10 Mbps. As already set forth, it is possible to achieve data-flow of 6 Mbps for video signals, using a frequency bandwidth of 1.8 MHz for each video channel.

PLCM **38** shown in **FIGURE 3** includes a coupler block 70. For high speed data communication, such as LAN communications, coupler block **70** is actually comprised of six dielectric-core couplers. Dielectric core couplers are disclosed in Applicant's co-pending patent applications. The dielectric-core couplers can be air-core couplers or may use another dielectric. The use of the multiple couplers within coupler block **70** allows the use of multiple modulated signals to provide the necessary data-flow rate for LAN and high speed data transmission. High speed data transmission is possible with the larger bandwidth (ie. 360 KHz) provided by the six couplers. Each coupler provides a data-flow rate of approximately fifty Kbaud. Using 6 couplers provides a combined data-flow rate of approximately 300 Kbaud. Using a Quadrature Phase Shift Keying (QPSK) modulation format achieves increases the data transmission throughput to approximately 600 Kbps. Then, using a 16 Quadrature Amplitude Modulation (16 QAM) format, the 600 Kbps rate can be doubled to 1.2 Mbps throughput.

For LAN communication at data-flow rates higher than 1.2 Mbps (ie. 10 Mbps), two or more of the video channels can be used with 16 QAM and/or 16 PSK modulation formats. Using two channels yields a bandwidth of 4 MHz in the exemplary embodiment, when only approximately 3 MHz of bandwidth is needed to achieve a throughput of 10 Mbps using 16 QAM/16 PSK modulation formats. This example illustrates another application for the high data-flow rate frequencies (2 - 30 MHz) other than for video transmission.

Like the LAN application which uses the 120 - 480 KHz frequency range, the 10 Mbps LAN application is an inter-premises application. Computers on either LAN could, nevertheless, communicate with an information signal line outside the customer premises. One example of an outside communication for a LAN is inclusion in a Wide Area Network (WAN). Other inter-premises applications can involve intercoms (voice or video telephone) and building system monitoring. These applications can also be connected to outside information signal lines. One example is a video teleconference using several video telephones connected to an outside information signal line capable of handling video telephone information signals.

Mixer **72** mixes or divides out the sine and cosine components of the signal (I and Q components) for filtering and other signal processing. The sine and cosine components are mixed by mixer **72** if signal flow is going from the communication station to the AC wall outlet and separate the components if communication is going from the AC wall outlet to the communication station. Each of the split signals is simultaneously filtered through a separate low-pass filter **74.** Low-pass filter **74** is tuned to filter out frequencies above 180 KHz for LAN/high speed data communication. Low-pass filter **74** has a cut-off frequency of 900 KHz for video transmissions.

Converter **76** converts analog signals to digital signals when receiving selectable information signals through coupler **70.** For transmission in the opposite direction, converter 76 converts digital signals to analog signals. It will be understood by those skilled in the art that the present communication network can also be set up to operate in a fully digital manner. This would require each communication station to handle digital signal information.

In **FIGURE 3**, mixers **72**, filters **74** and converters **76** are contained in a single integrated circuit chip **71**.

Digital signal processor **78** provides the digital filtering as well as the 16 PSK and 16 QAM modulation/demodulation. Digital signal processor **78** is controlled by a separate microprocessor **80** which, in turn, has separate internal or external memory **79,** such as an E-PROM or EE-PROM memory. Microprocessor **80** also uses additional "glue logic" **81** for operation. Microprocessor **80** and glue logic **81** may all be located on a single integrated circuit chip. Memory **79** may also be included on this single integrated circuit chip.

Interface protocol chip **77** contains the additional communication circuitry to allow connection to a desired communication station such as cable television tuner **40.** Interface protocol chip **77** provides communication protocols to transmit information to and from communication stations, such as telephones and video receivers/transmitters. Example protocols include Ethernet, Toen Ring, ATM, SONET, RS-232 and others as are understood in this art.

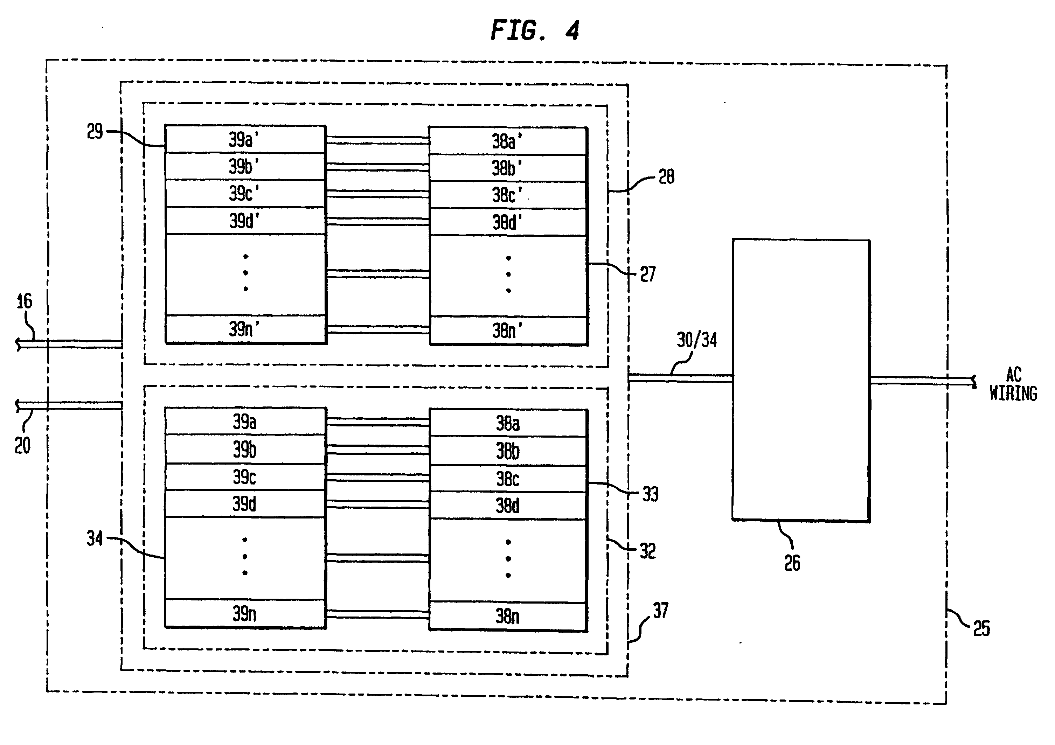

There is shown in FIGURE **4** an exemplary embodiment of a distribution panel **25.** Distribution panel **25** includes a video signal selector **32** and a telephone signal selector **28** contained in a single case unit **37.**

Video signal selector **32** contains a multi-PLCM unit **33** and a multi-tuner unit **34.** Multi PLCM unit **33** contains a number of PLCMs **38a - 38n,** depending upon the number of accessible video channels being used. In the exemplary embodiments described above, **14** video channels can be accessed in a house **12.** Accordingly, there can be up to 14 PLCMs located in multi-PLCM unit **33.** Each PLCM located in multi-PLCM unit **33** is equivalent to the PLCM **38** used with the communication stations in house **12.** Each PLCM **38** used in house **12** for receiving video would operate on a frequency between 2 and 30 MHz and have a corresponding PLCM in multi-PLCM unit **33.** In this way, there is a one to one relationship between a PLCM used in multi-PLCM unit **33** and a PLCM (such as PLCM **38**) used in house **12.** PLCMs **38a - 38n** can be in the form of "cards" fitted into slots (not shown) in multi-PLCM unit **33.**

Each PLCM **38a - 38n** is connected to a corresponding tuner **39a - 39n** in multi-tuner unit **34.** Each tuner **39a - 39n** is capable of tuning a selectable information signal, such as a video channel. Once a video channel is selected, the selectable signal information (the video information on the video channel) is transmitted through the corresponding PLCM in multi-PLCM unit **33,** through the electrical wiring to the PLCM unit **38** in a room in house **12** and finally to the communication station (such as a cable television tuner) which requested the channel selection. Each tuner **39a - 39n** is controlled through the reverse control signal transmitted in the .2MHz frequency band associated with each 1.8 MHz band for each video channel.

Telephone signal selector **28** is shown in a configuration similar to that of video signal selector **32.** Telephone signal selector is comprised of a multi-PLCM unit **27** and multi-tuner unit **29.** Mulit-PLCM unit **27** is in turn comprised of PLCMS **38a' - 38n'.** Each PLCM **38a' - 38n'** is connected to a corresponding tuner **39a' - 39n'.** As previously noted, for telephone service in a home, such as house **12,** it may not be necessary to have a multi-tuner unit **29.** Instead, all of the telephone lines would come into house **12,** with each telephone line connected directly to a PLCM **38a' - 38n'.** All telephone lines would then be accessible from any electrical outlet without the need to send a requesting signal. To access a line would simply require using a PLCM **38** corresponding to the PLCM **38a' - 38n'** to which the telephone line is connected in telephone signal selector **28.**

Telephone signal selector **28** and video signal selector **32** are shown connected to circuit breaker box **26** through connection line **30/34.** Because telephone and video information is transmitted over different frequencies, it is possible to use a single connection line to circuit breaker box **26** as shown in **FIGURE 4.** If separate signal selectors **28** and **32** are used, then separate connection lines **30** and **34** would be used as shown in **FIGURE 1.**

Distribution panel **25** serves as network interface device between the information signal lines and electrical wiring on which the information signals are distributed.

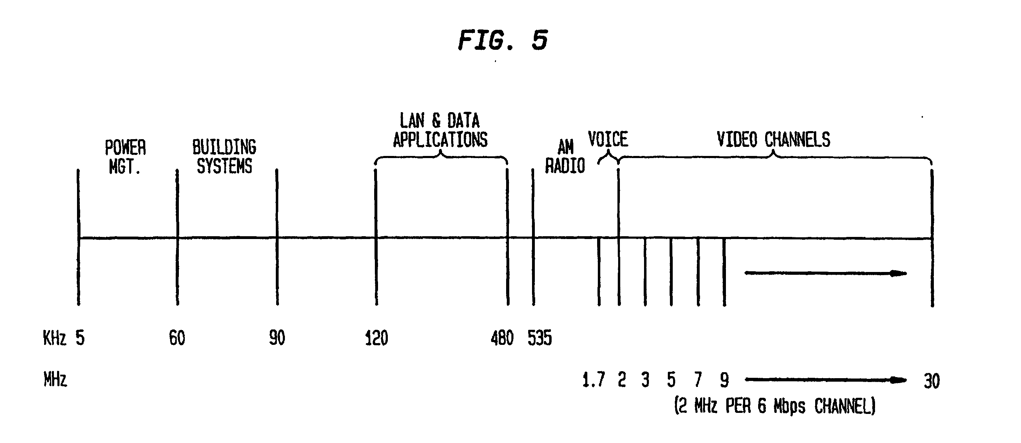

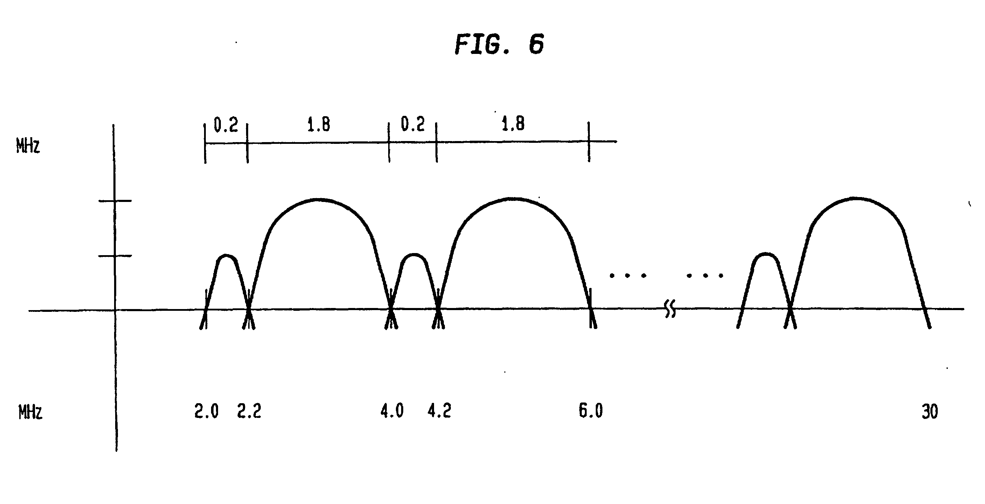

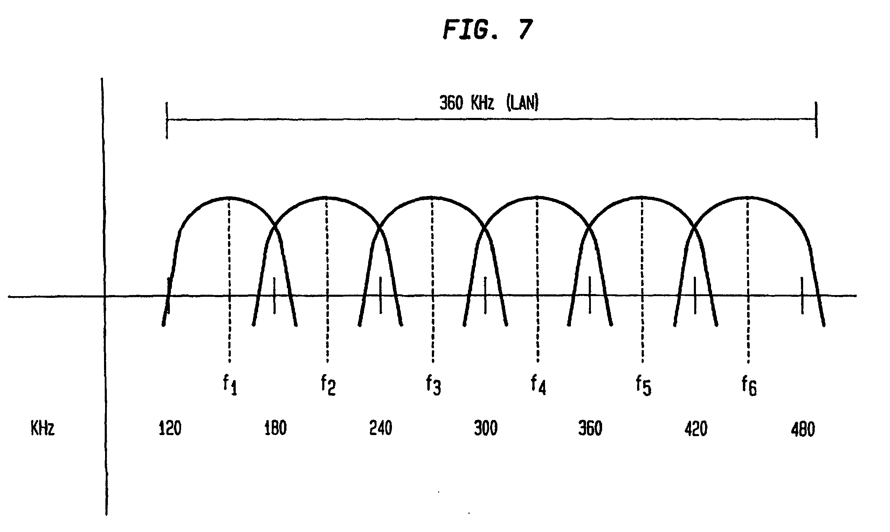

There is shown in **FIGURES 5, 6 and 7** illustrations of the frequency spectrum used in the present invention. LAN (high speed data) communications use the 120 KHz to 480 KHz frequency range, while video communications use the frequencies between 2 MHz and 30 MHz frequency range. Voice communication requires approximately 4 KHz of bandwidth. Therefore a sufficient number of telephone lines could be accessible between 1.7 MHz and 2MHz. Building systems shown in **FIGURE 5** include HVAC, lighting, security and others which are controlled and/or monitored.

Video signals, as previously discussed, would have approximately 1.8 MHz bandwidth. A 64-128 Kbps interactive reverse control signal is interspaced at .2MHz between each of the video signals (designated F1, F2....F7) and is be used for selecting a video channel. This selection signal is transmitted to video signal selector **32** for switching to the appropriate video station. The selected video station is tuned and transmitted through the electrical wiring back to the particular video television tuner **40** which sent the selection signal. This is how a user in house **12** would select a television channel, for example.

Because of the spacing of each frequency between 2 MHz and 30 MHz, approximately 14 television stations could be tuned at any one time in a given house **12.** For a multi-unit building such as an apartment building, each apartment has its own circuit breaker box and, thus, can have its own distribution panel. Each apartment, therefore, has its own 14 channel limit. Accordingly, any building or room having a separate wiring scheme (ie. distribution panel) can be provided with a selection of 14 separate television sets which can be operated simultaneously.

It is also possible, if additional television sets are used, that the telephone wiring (if present) of a house **12** could be set up as a separate distribution panel from that used for the AC electrical wiring. This provides the typical house with a total of 28 possible televisions that can be operated at the same time.

An example interactive set-up for house **12** may include 4 television sets (for tuning and receiving signals only), 4 computers communicating over an outside line at high speed (thus each computer would be using one of the 14 "video" channels) and three video telephones (requiring two channels each - one channel for receiving and one channel for transmitting). A number of telephone lines may also be used, as there is enough room between the proposed range of 1.7MHz - 2 MHz for approximately 70 telephone lines (300 KHz divided by 4KHz).

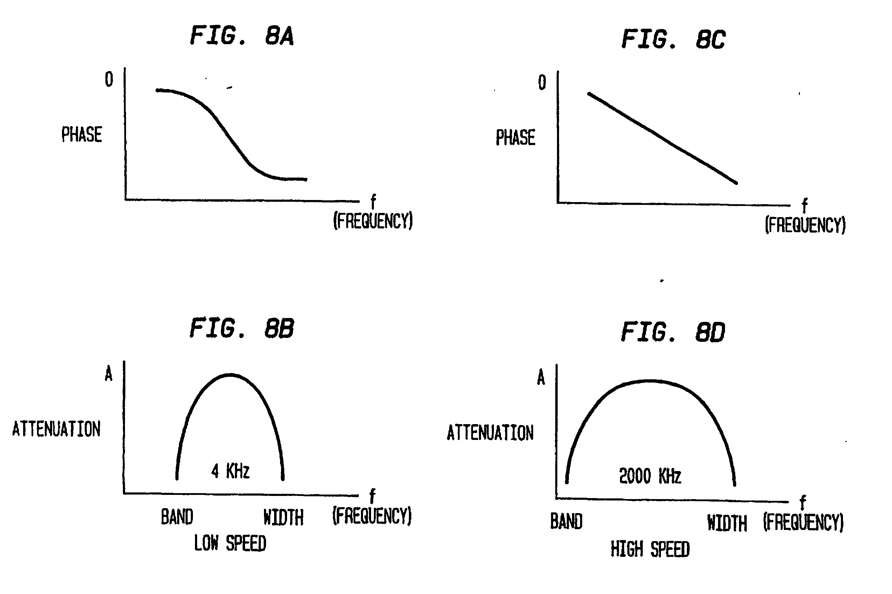

There is shown in **FIGURE 8** illustrations of the phase and attenuation of low speed signal (voice) and high speed signals (video/high speed data).

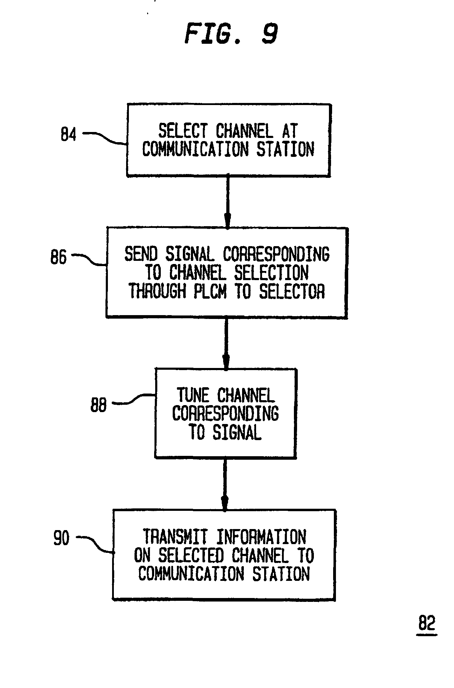

There is shown in **FIGURE 9** a flowchart **82,** showing steps for selecting selectable information signals (channel) in accordance with the present invention. In block **84,** a desired channel is selected. This takes place at a communication station such as cable television tuner **40,** for example, if the selection involves a cable television channel. This step applies equally to any selectable information signal to be selected.

In block **86,** a control signal is transmitted through a PLCM **38,** over the wiring to a signal selector, such as video signal selector **32.** The particular signal selector tunes the appropriate channel corresponding to the requesting signal in block **88.** The selectable information signals (ie. cable television channel signal) is then transmitted back through the electrical wiring to the PLCM **38** and finally to the communication station which requested the selectable information signal.

Exemplary dielectric core couplers as set forth in Applicant's co-pending application, U.S. Serial Number 07/822,326, filed January 17, 1992, are now described.

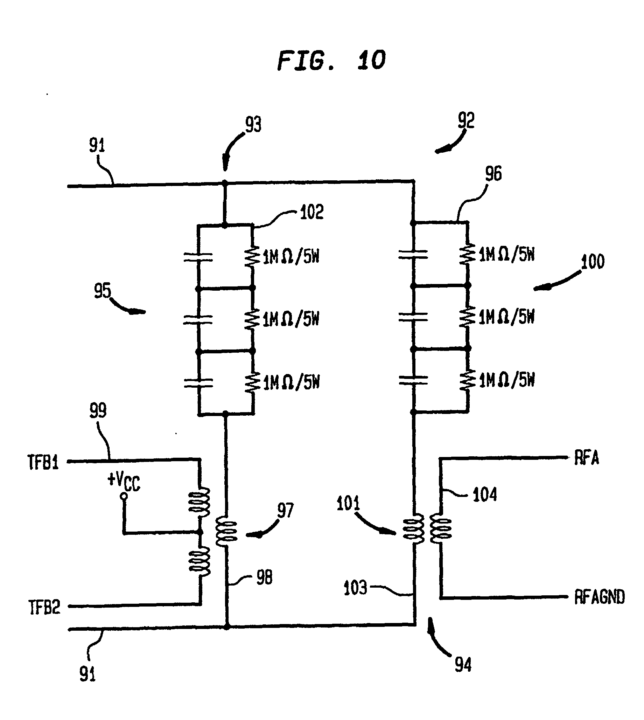

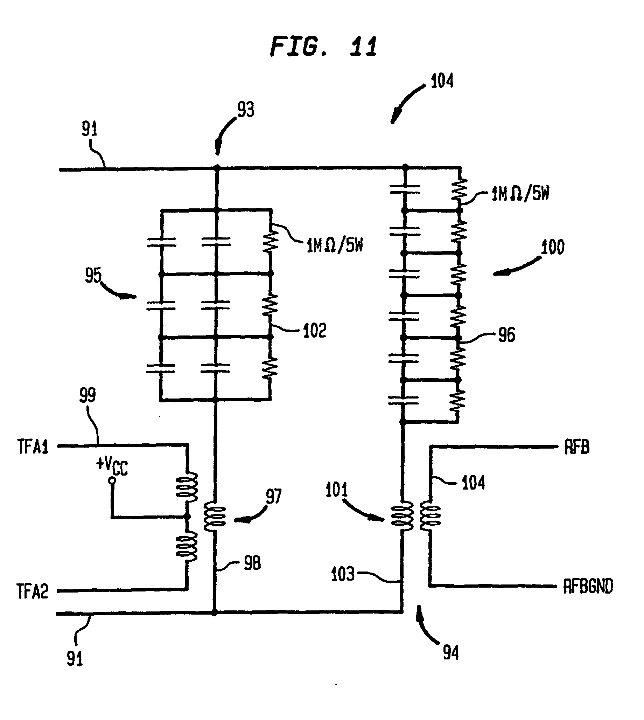

With reference next to Figs. 10 and 11, the specific circuitry for representative dielectric core couplers **92, 104** is now described in greater detail. Dielectric couplers **92** (Fig. 10), **104** (Fig. 11) each include a pair of serial LC circuits **93, 94** which resonate at the carrier frequencies FA, FB. It will be appreciated by those skilled in the art that for FSK (Frequency Shift Key) applications FA will correspond to F₁ and F₂ and FB will correspond to F₃ and F₄. The serial LC circuit **93** shown in Fig. 10 resonates at the second carrier frequency FB, while serial LC circuit **94** resonates at the first carrier frequency FA. Similarly, the serial LC circuit **93** of Fig. 11 resonates at the first carrier frequency FA, and serial LC circuit **94** resonates at the first carrier frequency FB.

The LC circuits include respective serially and parallelly connected capacitor networks **95, 100.** To each capacitor in series is connected a resistor **96** and **102** which evenly divides down the AC voltage. Preferably, the resistor values should be rated at 1 Megohm per 5 watts and the capacitors should be 200 VAC capacitors. The resistors should preferably be thick film (i.e. carbonless). The Q point of the capacitors should similarly be high. In operation, the couplers (LC) should be placed into a resin for good insulation when used with operating voltages up to 660v. At operating voltages above 660v, the capacitors should be separately placed in an oil filled insulator and the air coil transformer placed into a resin. The use of the resistors **96, 102** serve to minimize the DC current so as to prevent spiking and afford lightning protection.

It is to be appreciated that the capacitor networks **95, 100** create equivalent capacitances C_{eq1} and C_{eq2} for transmission and reception, respectively. The capacitor networks are connected to air-core transformers to be discussed below which function as the inductive element (L) of the LC circuit. C_{eq1} and C_{eq2} resonate with the primary windings of the air-core transformers.

The air coil means comprise a first air coil **97** which includes a primary winding **98** and a smaller secondary, winding **99** situated coaxially within the primary winding. The second serial LC circuit **94** includes second air coil **101** including a primary winding **103** and smaller secondary winding **104** situated coaxially within the primary winding.

The first plurality of capacitors **95** are connected together in series between one of the power-lines **91** and the primary winding **98** of the first air coil **97.** The primary winding **98** of the first air coil **97** is thereafter serially connected to the other power line **91.** The secondary winding **99** of the first air coil **97** is connected to its respective transmitter. The second plurality of capacitors **100** are serially connected together between one of power lines **91** and the primary winding **103** of the second air coil **101.** The primary winding **103** of the second air coil **101** thereafter being serially connected to the other power line **91.** As noted above, resistors **96** and **102** function to evenly divide the voltage and serve to minimize spiking and afford lightning protection.

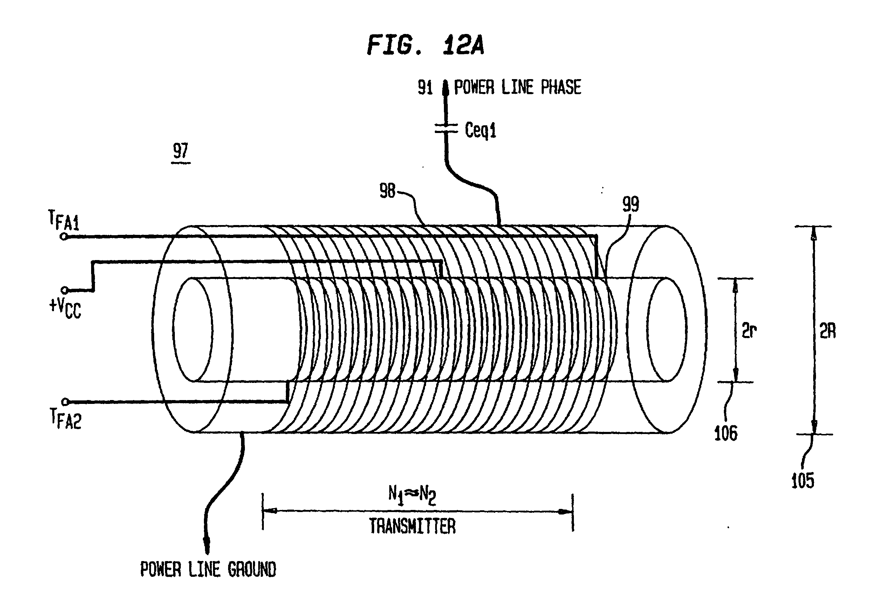

Referring to Figs. 12A-12B, the phase shift linear air-core transformers of the present invention are described in greater detail. The novel air coil structures function as respective inductively and capacitively coupled air-core transformers for both transmission and reception. Figure 12A illustrates the transmitter transformer **97** with coupling capacitor network C_{eq1}. As shown in Fig 12A, the transmitter transformer **97** is connected in series with C_{eq1} and the power line **91.** The transformer is phase shift linear and comprises a primary winding **98** and coaxial smaller secondary winding **99** which is placed between the primary winding. The primary winding **98** has a winding diameter 2R 39 which is greater than the diameter of the secondary winding 2r 41 and accordingly creates an air gap between the two. Of particular significance is the fact that both the primary and secondary windings **98, 99** in the transmitter air coils have the same number of turns (designated by N₁ = N₂), and are thus at a 1:1 ratio. Accordingly, the transmitter does not require a high transmission voltage, as is characterized by prior art devices. Further, C_{eq1} is set to resonate with the primary winding at the carrier frequency FA, thus creating a band pass filter at the carrier frequency FA. This maximizes the current at the carrier frequency FA.

The values of C_{eq1} and the resistors, **96**, **102** are set to generate a large voltage loss at frequencies less than 10KHz (thus encompassing the 60Hz and its harmonics). Thus, the significantly reduced 60Hz signal cannot generate a large enough current to pass the static capacitance. That is, for transmission, the resistivity of the primary coil is roughly equal to the lowest known value of the characteristic impedance of the power line.

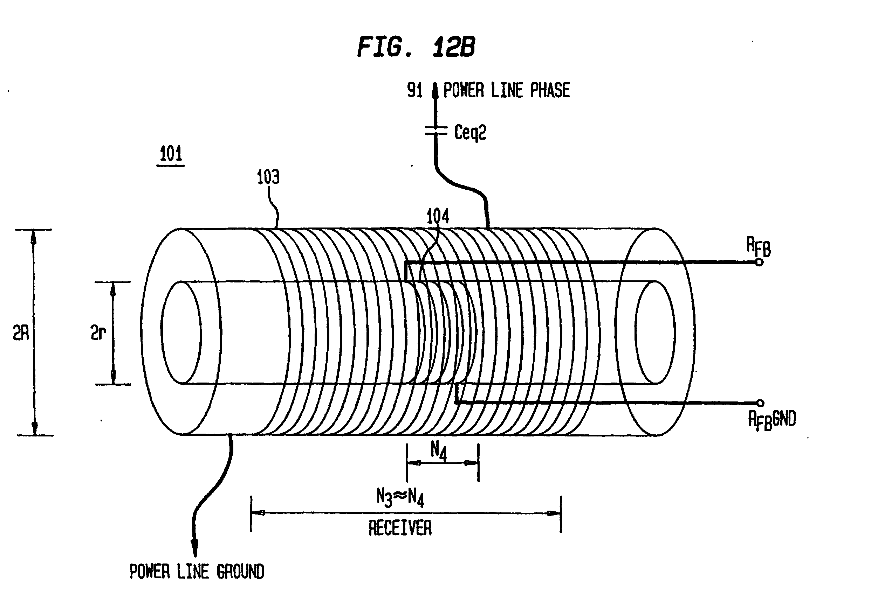

The receiver transformer is now described with respect to Fig. 12B. The receiver is connected to the power line **91** via C_{eq2}. As with the transmitter of Figure 12A, the receiver air coil comprises a phase shift linear transformer having a primary winding **103** with a first diameter 2R 47 and a secondary coaxial winding **104** having a second diameter 2R 49. Accordingly, an air gap, and thus a static capacitance, is similarly created between the respective primary and secondary windings **103, 104.** In the receiver transformer, the ratio of the primary and secondary windings can be about 1:1. While this ratio can be altered or modified, such a change requires a resultant alternation in the size of the air gap, i.e. the relative ratio of 2R and 2r. The capacitor network C_{eq2} is set to resonate with the primary winding at carrier frequency FB, thus creating a band pass filter at carrier frequency FB.

In operation, the power line voltage is significantly reduced by Ceq2 and the resistors. Thus, the static capacitance with the secondary winding significantly attenuates the 60Hz and its harmonics, thus effectively functioning as a high pass filter. The carrier frequency voltage is thereby maximized. The air-core transformer produces a wider phase linear bandwidth than previous systems. For good reception, the resistivity of the primary can be equal or greater than the lowest characteristic impedance of the power line.

From a design standpoint, the philosophy is to minimize the 60Hz line current and its harmonics at the output of the coupler. For higher voltage power-line coupling, the coupling capacitor, C_{eq}, should have a smaller value:
(f)²(carrier)/(f)²(60Hz) ratio determines the V_{carrier}/V_{60Hz} ratio at the output of the coupler. Preferably, a higher carrier frequency should be used for higher power line voltages. V_{carrier} is measured at the preselected carrier frequency at the secondary output of the receiver coupler in volts. V_{60Hz}, measured at the same location of V_{carrier}, is the voltage of the 60Hz.

The above relationships coupled with the capacitive transformers serve to block to 60Hz current. The resistive matching serves to reduce power line noise at the bandwidth. The above makes it possible to communicate directly through power line transformers. The use of an air-core transformer reduces reflected impedances from the secondary side as well as from the power line transformer to the primary side of the air-core transformer.

The couplers of the present invention can be applied to LAN (local area network) communications and facilitate communication speeds up to 10 Kilobaud. For this application, the coupling means **92** preferably use a first carrier frequency FA of around 75 KHz (and 81.5 KHz for FSK) and a second carrier frequency FB of around 111 KHz (and 117.5 KHz for FSK) over power-lines **91** of up to about 1 KVAC. The coupler preferably uses first pluralities of capacitors **95**, as shown therein, the coupling capacitor equivalent circuit is equal to 90 nanofarads. The first air coil **97** should have a primary winding **98** with a coil diameter of 2.2 cm, #26 gauge magnet wire and a secondary winding **99** with a coil diameter of about 1.7 cm, #28 gauge magnet wire. The second plurality of capacitors **100** has an equivalent circuit equal to 15 nanofarads. The second plurality of capacitors **100** has an equivalent circuit equal to 15 nanofarads. The second air coil **101** should have a primary winding **103** of 2.2 cm, #30 gauge magnet wire and a secondary winding **104** with a coil diameter of about 1.7 cm, #28 gauge magnet wire. Using a suitable transistor for transmitting, the communication speed can be increased above 9.6 kbaud over power, twisted pair, and coaxial lines.

On the other side of the system, coupling means **104** comprises first plurality of capacitors **95** as shown therein, the coupling capacitor equivalent circuit is equal to 40 nanofarads (this includes the static capacitance of the air-core transformer). As above, the first air coil **97** should have a primary winding **98** with a coil diameter of 2.2 cm, #26 gauge magnet wire and a secondary winding **99** with a coil diameter of 1.7 cm, #26 gauge magnet wire. The second plurality of capacitors **100,** as shown therein, coupling capacitance equivalent circuit is equal to 33 nanofarads. The second air coil **101** should similarly have a primary winding **103** of about 2.2 cm, #34 gauge magnet wire and a secondary winding **104** with a coil diameter of about 1.7 cm of the #30 gauge magnet wire.

For duplex operation, the resistive matching at the frequencies should be less than 1 Ohm for transmission and 3 Ohms for reception. For half duplex operation, the resistive matching should be about 1 Ohm for both transmission and reception.

While particular embodiments of the present invention are disclosed herein, it is not intended to limit the invention to such disclosure, and changes and modifications may be incorporated and embodied within the scope of the following claims:

## Claims

1. A communication network comprising:
an information signal line (18,20) carrying a plurality of selectable information signals;
electrical line wired throughout a building;
electrical outlets connected to said electrical line;
an electrical line distribution panel (25) connected to said information signal line and said electrical line for distributing said information signals over said electrical line to said electrical outlets in response to a corresponding selection signal;
dielectric core couplers (70) impedance matched with said electrical line connected to said electrical outlets; and
at least one communication station (40) connected to one of said dielectric core couplers for sending said selection signal and receiving said selectable information signals.

2. The communication network of claim 1 wherein said distribution panel is adapted to receive a selection signal from at least one of said communication stations to select one of said selectable information signals for transmission over said electrical line to said communication station.

3. The communication network of claim 1 wherein said data-flow rate of said selectable information signals over said electrical wire is substantially 6Mbps.

4. The communication network of claim 1 wherein said information signal line is a coaxial cable.

5. The communication network of claim 1 wherein said information signal line is a fiber optic cable.

6. The communication network of claim 1 wherein said information signal line is a twisted pair telephone line.

7. The communication network of claim 1 wherein said electrical line is an AC electrical wire.

8. The communication network of claim 1 wherein said communication station is a cable television tuner.

9. The communication network of claim 1 wherein said communication station is a computer with an attached modem.

10. The communication network of claim 1 wherein said communication station is a telephone device.

11. The communication network of claim 1 wherein said
distribution panel comprises a circuit breaker box or fuse box.

12. The communication network of claim 1 wherein said distribution panel comprises a transceiver adapted to distribute up to 14 separate selectable information signals throughout said building.

13. The communication network of claim 1 wherein said dielectric core is an air core.

14. A method of receiving, over an electrical line, selectable information signals carried on an information signal line comprising the steps of:
sending a selection signal corresponding to one of said selectable information signals through a dielectric core coupler (70) impedance matched with said electrical line;
receiving said selection signal at a distribution panel (25) connected to said information signal line;
interpreting said selection signal and sending said selectable information signal corresponding to said selection signal over said electrical line and through said dielectric core coupler to a receiving station (40).

## Patentansprüche

1. Kommunikationsnetz mit:
einer Informationssignalleitung (18, 20), die eine Vielzahl von wählbaren Informationssignalen überträgt;
einer Elektrizitätsleitung im gesamten Gebäude;
elektrischen Anschlussstellen an der Elektrizitätsleitung;
einer Elektrizitätsleitungs-Verteilertafel (25), die an die Informationssignalleitung und die Elektrizitätsleitung angeschlossen ist und, auf ein entsprechendes Auswahlsignal reagierend, die Informationssignale über die Elektrizitätsleitung an die elektrischen Anschlussstellen verteilt;
Kopplern mit dielektrischem Kern (70), impedanzangepasst an die mit den elektrischen Anschlussstellen verbundene Elektrizitätsleitung; und
mindestens einer Kommunikationsstation (40), die zum Senden des Auswahlsignals und zum Empfangen der wählbaren Informationssignale an einen der Koppler mit dielektrischem Kern angeschlossen ist.

2. Kommunikationsnetz nach Anspruch 1, wobei die Verteilertafel für den Empfang eines Auswahlsignals von mindestens einer der Kommunikationsstationen angepasst ist, um eines der wählbaren Informationssignale auszuwählen und über die Elektrizitätsleitung an die Kommunikationsstation zu senden.

3. Kommunikationsnetz nach Anspruch 1, wobei die Datenflussrate der wählbaren Informationssignale über die Elektrizitätsleitung im Wesentlichen 6 Mbit/s beträgt.

4. Kommunikationsnetz nach Anspruch 1, wobei die Informationssignalleitung ein Koaxialkabel ist.

5. Kommunikationsnetz nach Anspruch 1, wobei die Informationssignalleitung ein LWL-Kabel ist.

6. Kommunikationsnetz nach Anspruch 1, wobei die Informationssignalleitung eine verdrillte Fernsprechdoppelleitung ist.

7. Kommunikationsnetz nach Anspruch 1, wobei die Elektrizitätsleitung eine Wechselstromleitung ist.

8. Kommunikationsnetz nach Anspruch 1, wobei die Kommunikationsstation ein Kabelfernsehtuner ist.

9. Kommunikationsnetz nach Anspruch 1, wobei die Kommunikationsstation ein Computer mit Modem ist.

10. Kommunikationsnetz nach Anspruch 1, wobei die Kommunikationsstation ein Telefongerät ist.

11. Kommunikationsnetz nach Anspruch 1, wobei die erwähnte
Verteilertafel eine Ausschalterbox oder einen Sicherungskasten enthält.

12. Kommunikationsnetz nach Anspruch 1, wobei die erwähnte Verteilertafel einen Transceiver enthält, der bis zu 14 verschiedene wählbare Informationssignale über das Gebäude verteilen kann.

13. Kommunikationsnetz nach Anspruch 1, wobei der dielektrische Kern eisenkernlos ist.

14. Verfahren zum Empfang, über eine Elektrizitätsleitung, von wählbaren Informationssignalen, die über eine Informationssignalleitung getragen werden, wobei folgende Schritte ausgeführt werden:
ein elektrisches Signal, das einem der wählbaren Informationssignale entspricht, wird über einen Koppler mit dielektrischem Kern (70) gesendet, der an die Elektrizitätsleitung impedanzangepasst ist;
das Auswahlsignal wird von einer Verteilertafel (25) empfangen, die mit der Informationssignalleitung verbunden ist;
dabei wird das Auswahlsignal interpretiert, und das wählbare Informationssignal, das dem Auswahlsignal entspricht, wird über die Elektrizitätsleitung und durch den Koppler mit dielektrischem Kern an die Empfangsstation (40) gesendet.

## Revendications

1. Réseau de communications comprenant :
une ligne de signaux d'information (18, 20), transportant une pluralité de signaux d'information capables d'être sélectionnés ;
une ligne électrique câblée à travers un bâtiment ;
des prises de sortie électriques connectées à ladite ligne électrique ;
un panneau de distribution de lignes électriques (25), connecté à ladite ligne de signaux d'information et à ladite ligne électrique, en vue de la distribution desdits signaux d'information sur ladite ligne électrique auxdites prises de sortie électriques en réponse à un signal de sélection correspondant ;
des coupleurs à coeur diélectrique (70), assortis en impédance à ladite ligne électrique connectée auxdites prises de sortie électriques ; et
au moins un poste de communication (40), connecté à l'un desdits coupleurs à coeur diélectrique pour l'envoi dudit signal de sélection et pour la réception desdits signaux d'information capables de sélection.

2. Réseau de communications selon la revendication 1, **caractérisé en ce que** ledit panneau de distribution est adapté à la réception d'un signal de sélection en provenance d'au moins un desdits postes de communication pour sélectionner l'un desdits signaux d'information capables de sélection pour la transmission sur ladite ligne électrique audit poste de communication.

3. Réseau de communications selon la revendication 1, **caractérisé en ce que** ladite vitesse de débit des données desdits signaux d'information capables de sélection sur ledit câble électrique est substantiellement de 6 Mbps.

4. Réseau de communications selon la revendication 1, **caractérisé en ce que** ladite ligne de signaux d'information est un câble coaxial.

5. Réseau de communications selon la revendication 1, **caractérisé en ce que** ladite ligne de signaux d'information est un câble à fibres optiques.

6. Réseau de communications selon la revendication 1, **caractérisé en ce que** ladite ligne de signaux d'information est une ligne de téléphone à paire torsadée.

7. Réseau de communications selon la revendication 1, **caractérisé en ce que** ladite ligne électrique est un câble électrique CA.

8. Réseau de communications selon la revendication 1, **caractérisé en ce que** ledit poste de communication est un récepteur de télévision par câble.

9. Réseau de communications selon la revendication 1, **caractérisé en ce que** ledit poste de communication est un ordinateur à modem incorporé..

10. Réseau de communications selon la revendication 1, **caractérisé en ce que** ledit poste de communication est un dispositif téléphonique.

11. Réseau de communications selon la revendication 1, **caractérisé en ce que** ledit panneau de distribution comprend un boîtier de disjoncteurs ou un boîtier à fusibles.

12. Réseau de communications selon la revendication 1, **caractérisé en ce que** ledit panneau de distribution comprend un transducteur adapté à la distribution de jusqu'à 14 signaux d'information séparés capables de sélection à travers ledit bâtiment.

13. Réseau de communications selon la revendication 1, **caractérisé en ce que** ledit coeur diélectrique est un coeur à air.

14. Procédé de réception, sur une ligne électrique, de signaux d'information capables de sélection transportés sur une ligne de signaux d'information comprenant les étapes :
d'envoi d'un signal de sélection correspondant à l'un desdits signaux d'information capables de sélection à travers un coupleur à coeur diélectrique (70), assorti en impédance à ladite ligne électrique ;
de réception dudit signal de sélection à un panneau de distribution (25), connecté à ladite ligne de signaux d'information ;
d'interprétation dudit signal de sélection et d'envoi dudit signal d'information capable de sélection correspondant audit signal de sélection sur ladite ligne électrique et à travers ledit coupleur à coeur diélectrique à une station de réception (40).
